# EUROPÄISCHE PATENTSCHRIFT

(11) **EP 0 551 125 B1**
(45) Veröffentlichungstag und Bekanntmachung des Hinweises auf die Patenterteilung: **21.05.1997**
(21) Anmeldenummer: 93100208.3
(22) Anmeldetag: 08.01.1993
(51) Int. Cl.: C08L 1/08, C08L 3/02, C08L 1/02, B65D 65/46

(54) **Verfahren zur Herstellung eines biologisch abbaubaren Verpackungsmittels und seine Verwendung**
Process for producing a biodegradable packaging material and uses thereof
Procédé de préparation d'un emballage biodégradable et son utilisation

(30) Priorität: 10.01.1992 DE 4200485
(43) Veröffentlichungstag der Anmeldung: 14.07.1993
(73) Patentinhaber: Buck Werke GmbH & Co, 73337 Bad Überkingen (DE)
(72) Erfinder: Schroeter, Johannes, Dr. Ing., 83109 Grosskarolinenfeld (DE)
(74) Vertreter: Spott, Gottfried, Dr.

(56) Entgegenhaltungen:
- EP-A- 0 409 781
- US-A- 2 137 350
- US-A- 3 329 509
- US-A- 4 099 976
- NEUE VERPACKUNG Bd. 44, Nr. 1, 1991, HEIDELBERG DE Seiten 50 - 52 'Abbaubare Polymere für Verpackungen'

## Beschreibung

Die Erfindung betrifft einen biologisch abbaubaren Werkstoff, ein Verfahren zu seiner Herstellung und seine Verwendung.

Schon seit längerem sucht man in der Verpackungsindustrie nach Alternativen zu den bislang bekannten Kunststoffen, die zwar einerseits sehr gute Anwendungseigenschaften aufweisen und in der Regel kostengünstig herzustellen sind, andererseits aber Probleme bei ihrer Entsorgung bereiten, da sie unverrottbar sind und deswegen zu einem Anwachsen der Müllberge führen. Es wurde schon vorgeschlagen, biologisch abbaubare Werkstoffe zu verwenden, um die Müllproblematik zu entschärfen. Diese Werkstoffe haben jedoch den Nachteil, daß sie gegenüber den bisher bekannten Verpackungsmaterialien um ein Mehrfaches teurer sind. Um diesen Nachteil zu überwinden, wurde vorgeschlagen, in Polyethylenfolie Stärke als Füllstoff einzuarbeiten, die sowohl als billiger Füllstoff die Kosten senken als auch zu einer besseren biologischen Abbaubarkeit führen soll. Da jedoch die Abbaubarkeit des Polyethylens selbst hierdurch nicht verändert wird, löst dieser Ansatz nicht die Problematik hinsichtlich des Müllproblems und andererseits werden durch den Zusatz von Stärke die mechanischen Eigenschaften der Polyethylenfolie gemindert.

Aus US-A 2 137 350 ist die Herstellung von Patronenhülsen bekannt, die aus Celluloseacetat, einem hohen Anteil an Weichmacher und Weizenmehl hergestellt werden können.

Weiterhin ist aus US-A 3 329 509 eine Verpackungsmembran für Nahrungsmittel, insbesondere in Form einer Wursthülle, bekannt, die aus einem filmbildenden Material, das in Wasser unlöslich ist, und einem hydrophilen, aber wasserunlöslichen Inhaltsstoff aufgebaut ist. Der hydrophile Bestandteile kann zum Beispiel Stärke sein. Die Herstellung des Werkstoffes erfolgt, indem einfach die beiden Bestandteile miteinander vermischt werden, so daß es nicht zu einer Einbettung der Stärkekörner in das filmbildende Material kommen kann.

Es war nun Aufgabe der vorliegenden Erfindung, einen biologisch abbaubaren Werkstoff bereitzustellen, der einerseits hinsichtlich seiner mechanischen und physikalischen Eigenschaften mit reinen Kunststoffolien vergleichbar ist, andererseits schnell biologisch abgebaut wird und kostengünstig hergestellt werden kann.

Diese Aufgabe wird gelöst durch ein Verfahren zur Herstellung eines biologisch abbaubaren Verpackungsmittels, indem man mindestens 30 Gewichtsprozent eines biologisch abbaubaren Kunststoffs auf Basis Polysaccharid mit einem Schmelzpunkt bis 240°C aufschmilzt, gleichzeitig oder anschließend 20 bis 70 Gewichtsprozent native Stärke oder unmodifizierte Cellulose zugibt, wobei der Wassergehalt der Stärke 20% nicht übersteigt, das Gemisch granuliert und das Granulat dann in üblicher Weise formt, wobei solche Bedingungen angewendet werden, daß die Kornstruktur der Stärke im wesentlichen nicht verändert wird und wobei die Mischung gegebenenfalls übliche Hilfsmittel enthalten kann.

Überraschenderweise wurde gefunden, daß eine Mischung von nativer Stärke oder unmodifizierter Cellulose mit einem Kunststoff auf Basis Polysaccharid Produkte liefert, deren mechanische Eigenschaften hervorragend sind und die teilweise bis zum Faktor 10 schneller biologisch abgebaut werden als die bisher bekannten biologisch abbaubaren Kunststoffe.

Die eine wesentliche Komponente des erfindungsgemäßen Werkstoffes ist ein biologisch abbaubarer Kunststoff auf Basis Polysaccharid. Derartige Kunststoffe sind an sich bekannt und alle biologisch abbaubaren Kunststoffe auf Basis Polysaccharid, die sich zu geformten Werkstücken verarbeiten lassen, sind hier geeignet. Bevorzugt werden als biologisch abbaubare Kunststoffe thermoplastische Derivate von Cellulose verwendet. Als besonders geeignet haben sich Celluloseacetat, Cellulosepropionat, Cellulosebutyrat, Celluloseacetobutyrat und Ethylcellulose erwiesen. Diese Cellulosederivate sind handelsübliche Produkte und ihre Herstellung braucht daher nicht näher erläutert zu werden. Der biologisch abbaubare Kunststoff wird in einer Menge von mindestens 30 Gew.% verwendet. Bevorzugt liegt der Anteil des Kunststoffs bei 40 bis 70 Gew.%.

Unter "biologisch abbaubarer Kunststoff" wird ein Kunststoff verstanden, der bei einem Erdeingrabeversuch einen Masseverlust von mindestens 20 g/m² pro Jahr, bevorzugt mindestens 30 g/m² pro Jahr, infolge mikrobakterieller Einflüsse erleidet. Ein Verfahren zur Bestimmung des Masseverlustes ist Beispiel 4 zu entnehmen.

Die zweite wesentliche Komponente des erfindungsgemäßen Werkstoffs ist eine native Stärke oder unmodifizierte Cellulose. Die native Stärke kann aus allen stärkehaltigen Pflanzenmaterialien, die an sich bekannt sind, gewonnen werden, wie zum Beispiel Kartoffeln, Mais, Reis oder Getreide. Die aus diesen Materialien gewonnene Stärke liegt in Form von Körnchen vor. Unmodifizierte Cellulose kann ebenfalls aus pflanzlichem Material gewonnen werden, insbesondere aus Pflanzenfasern wie Baumwolle, Jute, Flachs, Hanf, Ramie (Chinagras), sowie aus dem Holz von Nadel- und Laubbäumen und aus Stroh. Die reine Cellulose ist wie die Stärke aus Glucoseeinheiten aufgebaut, liegt jedoch aufgrund der β-glykosidischen Verknüpfung nicht in Form von Kügelchen, sondern in Form von langen Ketten, die zu Bündeln vereinigt sind, also faserig vor. Der Anteil an nativer Stärke oder unmodifizierter Cellulose in dem Werkstoff kann im Bereich von 20 bis 70 Gew.%, bevorzugt 30 bis 60 Gew.%,liegen. Ein Anteil von weniger als 15 % ist ebenfalls möglich, weist jedoch keine ökonomischen Vorteile mehr auf. Ein Anteil von etwa 70 Gew.% stellt aus geometrischen Gründen die obere Grenze der Konzentration dar. Das für den jeweiligen Verwendungszweck günstigste Verhältnis der beiden erfindungsgemäßen Komponenten kann vom Fachmann in wenigen Versuchen leicht ermittelt werden.

Nur bei Verwendung der beiden erfindungswesentlichen Komponenten werden die erfindungsgemäßen Vorteile erzielt. Wird die Stärke oder unmodifizierte Cellulose mit anderen biologisch abbaubaren Kunststoffen, die jedoch nicht die Struktur von Polysacchariden haben, vermischt, so kommt es zu einer Verminderung der mechanischen Festigkeit in dem Maße, wie der Anteil an Stärke oder unmodifizierter Cellulose steigt. Demgegenüber ist die mechanische Festigkeit bei der erfindungsgemäßen Kombination gegenüber den mechanischen Werten für den biologisch abbaubaren Kunststoff höher, als es dem Anteil des biologisch abbaubaren Kunststoffes entspricht.

Der Werkstoff kann außer diesen beiden erfindungswesentlichen Komponenten noch weitere für die Herstellung von Verpackungsmaterialien übliche Zusatzstoffe, wie z.B. Füllstoffe, Farbstoffe oder sonstige Hilfsstoffe enthalten. Art und Menge von geeigneten Zusatzstoffen sind an sich bekannt und bedürfen keiner näheren Erläuterung.

Besonders vorteilhaft sind bei dem erfindungsgemäß hergestellten Werkstoff die biologische Abbauraten. Verglichen mit dem biologischen Abbau des biologisch abbaubaren Kunststoffs alleine wird hier eine Beschleunigung der Abbaurate bis zum Faktor 10 erzielt. Besonders günstige Ergebnisse werden erzielt bei Verwendung von Stärke.

Erfindungsgemäß kann der Werkstoff vorteilhaft durch Compoundierung oder Bildung eines Organosols hergestellt werden. Wenn der Anteil der Stärke im unteren Bereich liegt, kann der erfindungsgemäße Werkstoff einfach durch Vermischen der beiden Komponenten und anschließende Formung in an sich bekannter Weise hergestellt werden. Höhere Anteile an Stärke können dazu führen, daß die Mischung die zur Formung verwendete Vorrichtung verstopft. Zur Herstellung von erfindungsgemäßen Werkstoffen, die mehr als etwa 20 bis 25% Stärke enthalten, wird deshalb weiterhin ein Verfahren zur Verfügung gestellt, mit dem diese Probleme vermieden werden können.

Bevorzugt werden abbaubarer Kunststoff und Stärke bzw. unmodifizierte Cellulose vermischt und der Kunststoff in Gegenwart der Stärke aufgeschmolzen.

Zur Formung wird das Granulat bevorzugt durch Verpressen, Spritzguß oder Extrusion weiterverarbeitet.

Mit diesem erfindungsgemäßen Verfahren läßt sich der Werkstoff kostengünstig und einfach herstellen. Bei dem Vermischen des aufgeschmolzenen Kunststoffes werden solche Bedingungen angewendet, daß die Kornstruktur der Stärke im wesentlichen nicht verändert wird. Geeignet sind Temperaturen im Bereich vom Schmelzpunkt des Kunststoffes bis zu etwa 240°C. Der Wassergehalt der Stärke sollte dabei 20%, bevorzugt 15%, nicht übersteigen.

Eine weitere Ausführungsform zur Herstellung des Werkstoffs ist ein Verfahren, bei dem man mindestens 30 Gewichtsprozent eines biologisch abbaubaren Kunststoffs auf Basis Polysaccharid in einem Lösungsmittel, das Stärke bzw. unmodifizierte Cellulose nicht lösen kann, löst, der Lösung 20 bis 70 Gewichtsprozent native Stärke oder unmodifizierte Cellulose zugibt, und das erhaltene Organosol in an sich bekannter Weise formt, wobei die Mischung gegebenenfalls übliche Hilfsmittel enthalten kann.

Für diese Verfahrensvariante geeignete Lösungsmittel sind dem Fachmann bekannt, bevorzugt werden Aceton und Ethanol verwendet.

Die Formgebung des Organosols erfolgt bevorzugt durch Streichen, Gießen, Rakeln oder Spritzen in an sich bekannter Weise, unter Austreiben des Lösungsmittels.

Der erfindungsgemäß hergestellte Werkstoff kann beispielsweise zu Verpackungen für diverse Materialien verarbeitet werden. Aufgrund seiner Zusammensetzung ist dieses Material besonders geeignet zur Verpackung von Nahrungsmitteln, Kosmetika, Reinigungsmitteln und Haushaltsbedarf. Bevorzugt wird der Werkstoff für die Verpackung von festen Schüttgütern verwendet. Für die Verpackung zum Beispiel von aggressiven Materialien, wie Säuren, Reinigungs- und Putzmitteln, kann eine für diese Medien undurchlässige Beschichtung auf dem erfindungsgemäßen Werkstoff vorgesehen werden.

Bevorzugt wird der erfindungsgemäß hergestellte Werkstoff in Form von Dosen verpreßt oder in Formen verarbeitet, die als Deckel und Boden für Dosen aus gewickeltem Papier Verwendung finden. Erfindungsgemäß wird ein Werkstoff zur Verfügung gestellt, der besonders umweltfreundlich ist, da er einerseits aus nachwachsenden Materialien hergestellt wird und andererseits sehr schnell wieder biologisch abgebaut werden kann. Darüber hinaus bietet er sowohl hinsichtlich seiner mechanischen Eigenschaften als auch aus ökonomischen Gründen besondere Vorteile gegenüber bisher bekannten Verpackungsmaterialien.

Die Erfindung wird durch die folgenden Beispiele erläutert.

### Bespiel 1

Es wurde 1 kg Cellulosepropionat in Granulatform und 1 kg native Kartoffelstärke in Pulverform vermischt. Die Mischung wurde soweit erhitzt, daß das Cellulosepropionat Schmolz und dann granuliert. Das Granulat wurde in eine pritzgußvorrichtung gefüllt und zu Formstücken geformt, die als Deckel oder Boden für aus Papier gewickelte Dosen geeignet sind.

### Beispiel 2

Es wurde 1 kg Celluloseacetat in 9 kg Aceton gelöst. Zu der Lösung wurde 1 kg native Stärke zugegeben. Das erhaltene Organosol wurde vergossen und das Aceton verdampft. Es entstand eine Folie mit guten Festigkeitseigenschaften.

### Beispiel 3

Die Abbaubarkeit von Kunststoffen wird überprüft in einem Erdeingrabeversuch. Dazu wird ein Probekörper mit den Abmessungen 45 x 22 x 2 mm, der aus einem Kern aus Aluminium und einer Beschichtung aus dem zu untersuchenden biologisch abbaubaren Kunststoff besteht, in Erde eingegraben. Die Erde hat die folgende Zusammensetzung:

| | |
|---|---|
| Biologisch-organischer Kohlenstoff | 29,0% |
| Organischer Stickstoff | 0,2% |
| Organische Substanz | 50,0% |
| pH | 5,5 - 6,5 |
| Widerstand (Leitfähigkeit) | 2000 Ω |
| Trockenbestandteil des Bruttogewichtes (bestehend aus Kulturtorf, pflanzlichen Produkten) | 37,0% |
| Organischer Anteil des Bruttogewichtes | 20,0% |
| Wasseraufnahmefähigkeit | 600,0% |
| Der Rest ist Sand und Wasser. | |

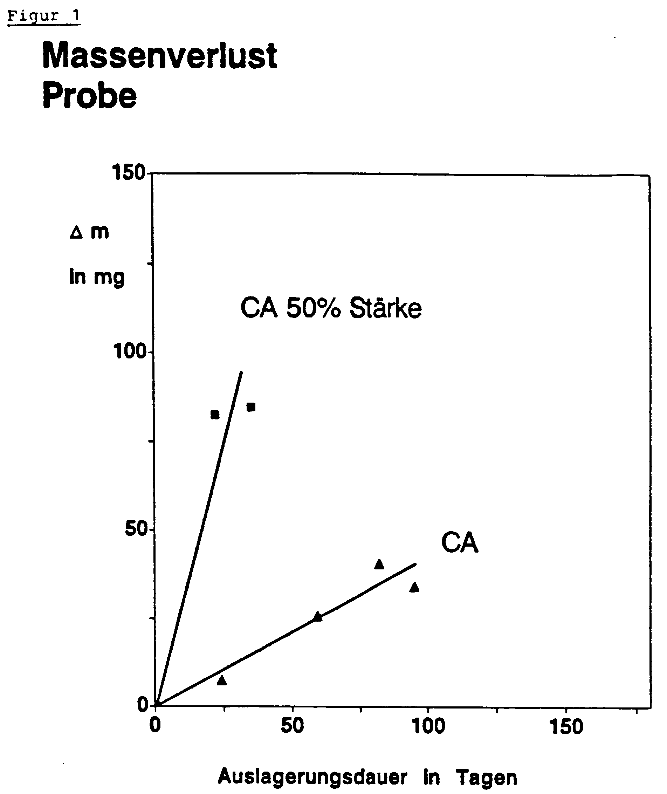

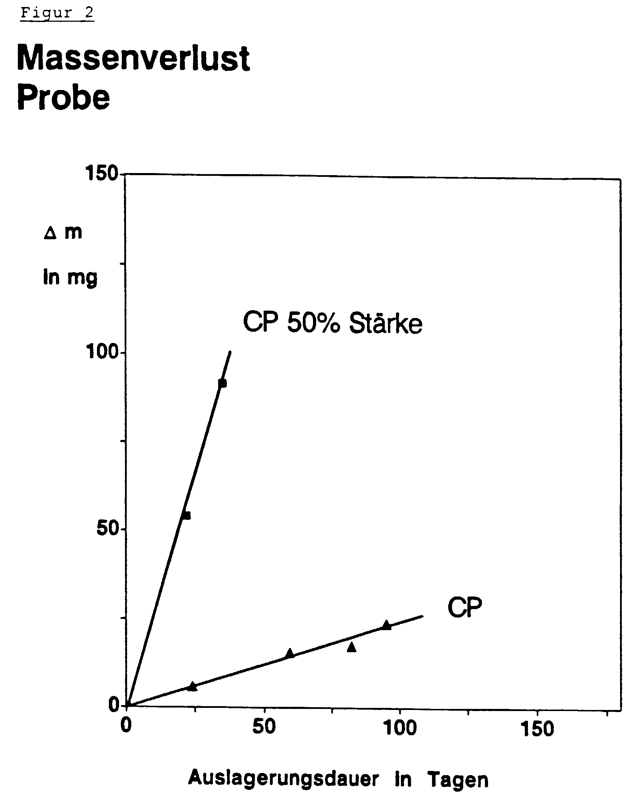

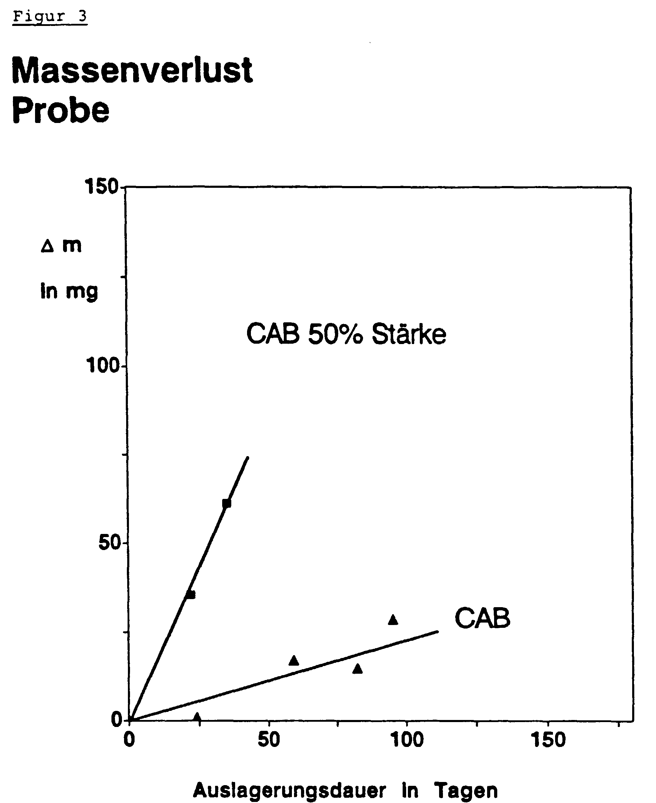

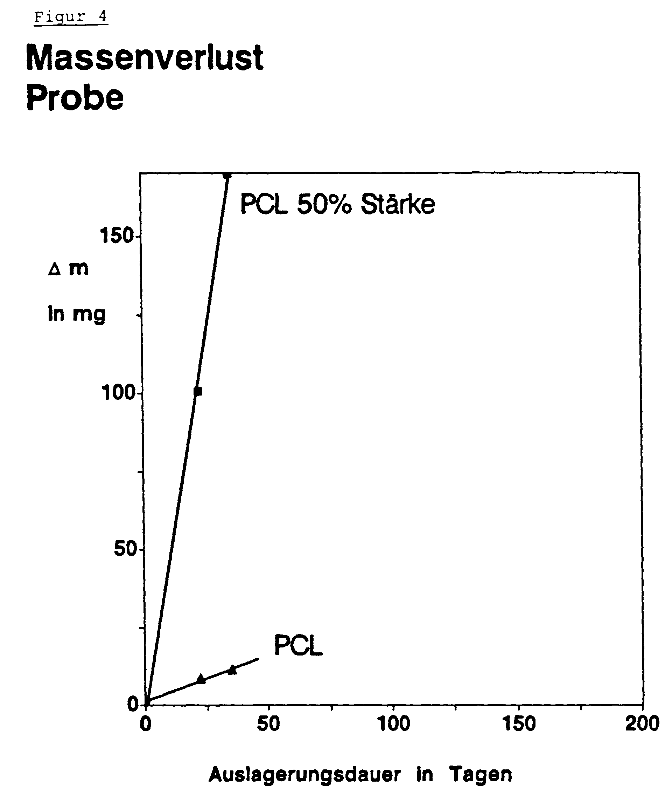

Der Versuch wird bei ca. 20°C durchgeführt. In Zeitintervallen wird der Masseverlust der Probe bestimmt, das heißt der Verlust an Gewicht pro m² Oberfläche. Der Versuch wurde durchgeführt mit folgenden polymeren Werkstoffen: CA = Celluloseacetat, CP = Cellulosepropionat, CAB = Celluloseacetobutyrat und PCL = Polycaprolacton (Vergleich) sowie jeweils einer erfindungsgemäßen Kombination von biologisch abbaubarem Werkstoff und Stärke. Die Ergebnisse sind den beigefügten Figuren 1 bis 4 zu entnehmen.

Figur 1 zeigt den Masseverlust von Probekörpern, die mit Celluloseacetat allein (CA) beziehungsweise mit Celluloseacetat in Kombination mit 50% Stärke beschichtet sind.

Figur 2 zeigt den Masseverlust von Probekörpern, die mit Cellulosepropionat (CP) allein beziehungsweise einer Kombination von 50% Stärke und Cellulosepropionat beschichtet sind.

Figur 3 zeigt den Masseverlust von Probekörpern, die mit CAB (Celluloseacetobutyrat) allein beziehungsweise einer Kombination von 50% Stärke und Celluloseacetobutyrat beschichtet sind.

Figur 4 zeigt den Masseverlust von Probekörpern, die mit Polycaprolacton allein beziehungsweise Polycaprolacton mit 50% Stärke beschichtet sind.

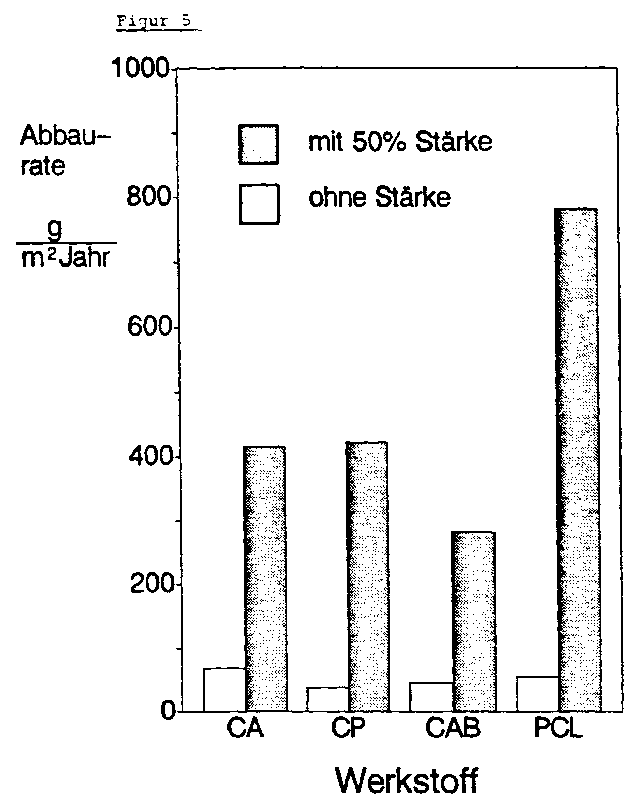

In den Diagrammen ist jeweils der Masseverlust aufgetragen gegen die Zeit (in Tagen). Ein Vergleich der Diagramme zeigt, daß die erfindungsgemäße Kombination eines biologisch abbaubaren Werkstoffs mit Stärke ausgezeichnete Abbauraten aufweist, die gegenüber dem jeweiligen Cellulosederivat alleine stark erhöht sind. Die Ergebnisse der einzelnen Cellulosederivate allein beziehungsweise in Mischung mit 50% Stärke sind nochmals einander gegenübergestellt in Figur 5.

Figur 5 zeigt eine schematische Darstellung, in der die Abbauraten in g/m² pro Jahr aufgetragen sind.

## Patentansprüche

1. Verfahren zur Herstellung eines biologisch abbaubaren Verpackungsmittels, indem man mindestens 30 Gewichtsprozent eines biologisch abbaubaren Kunststoffs auf Basis Polysaccharid mit einem Schmelzpunkt bis 240°C aufschmilzt, gleichzeitig oder anschließend 20 bis 70 Gewichtsprozent native Stärke oder unmodifizierte Cellulose zugibt, wobei der Wassergehalt der Stärke 20% nicht übersteigt, das Gemisch granuliert und das Granulat dann in üblicher Weise formt, wobei solche Bedingungen angewendet werden, daß die Kornstruktur der Stärke im wesentlichen nicht verändert wird und wobei die Mischung gegebenenfalls übliche Hilfsmittel enthalten kann.

2. Verfahren zur Herstellung eines biologisch abbaubaren Verpackungsmittels, indem man mindestens 30 Gewichtsprozent eines biologisch abbaubaren Kunststoffs auf Basis Polysaccharid in einem Lösungsmittel, das Stärke bzw. unmodifizierte Cellulose nicht lösen kann, löst, der Lösung 20 bis 70 Gewichtsprozent native Stärke oder unmodifizierte Cellulose zugibt, und das erhaltene Organosol in an sich bekannter Weise formt, wobei die Mischung gegebenenfalls übliche Hilfsmittel enthalten kann.

3. Verfahren nach Anspruch 1 oder 2, **dadurch gekennzeichnet, da**ß als biologisch abbaubarer Kunststoff ein thermoplastisches Derivat von Cellulose verwendet wird.

4. Verfahren nach einem der vorhergehenden Ansprüche, **dadurch gekennzeichnet, daß** als biologisch abbaubarer Kunststoff Celluloseacetat, Cellulosepropionat, Cellulosebutyrat, Celluloseacetobutyrat oder Ethylcellulose verwendet wird.

5. Verfahren nach einem der vorhergehenden Ansprüche, **dadurch gekennzeichnet, daß** als native Stärke Kartoffelstärke verwendet wird.

6. Verfahren nach einem der Ansprüche 1, 3, 4 oder 5, **dadurch gekennzeichnet, daß** man den Kunststoff mit der Stärke bzw. der unmodifizierten Cellulose vermischt und den Kunststoff in Gegenwart der Stärke bzw. unmodifizierten Cellulose aufschmilzt.

7. Verfahren nach Anspruch 1 oder 6, **dadurch gekennzeichnet, daß** die Formgebung durch Verpressen, Spritzguß oder Extrusion erfolgt.

8. Verfahren nach Anspruch 2, **dadurch gekennzeichnet, daß** man das Organosol unter Austreiben des Lösungsmittels durch Streichen, Gießen, Rakeln oder Spritzen formt.

9. Verwendung eines mit einem Verfahren nach einem der Ansprüche 1 bis 8 hergestellten Werkstoffs zur Verpackung von Lebensmitteln, Kosmetika und Reinigungsmitteln.

## Claims

1. Method for preparing a biodegradable packaging material, by melting at least 30 per cent by weight of a biodegradable polysaccharide-based synthetic material having a melting point up to 240°C, adding at the same time or subsequently 20 to 70 per cent by weight of natural starch or unmodified cellulose, wherein the water content of the starch does not exceed 20%, granulating the mixture and then moulding the granulated material in the usual way, wherein such conditions are used that the grain structure of the starch is essentially not altered, and wherein the compound can possibly contain standard auxiliary products.

2. Method for preparing a biodegradable packaging material, by dissolving at least 30 per cent by weight of a biodegradable polysaccharide-based synthetic material in a solvent which cannot dissolve starch or unmodified cellulose, adding to the solution 20 to 70 per cent by weight of natural starch or unmodified cellulose, and moulding the organosol which is obtained in a manner known per se, wherein the compound can possibly contain standard auxiliary products.

3. Method according to claim 1 or 2, characterised in that a thermoplastic derivative of cellulose is used as a biodegradable synthetic material.

4. Method according to one of the preceding claims, characterised in that cellulose acetate, cellulose propionate, cellulose butyrate, cellulose acetate butyrate or ethylcellulose is used as a biodegradable synthetic material.

5. Method according to one of the preceding claims, characterised in that potato starch is used as a natural starch.

6. Method according to one of the claims 1, 3, 4 or 5, characterised in that the synthetic material is mixed with the starch or the unmodified cellulose and the synthetic material is melted in the presence of the starch or unmodified cellulose.

7. Method according to claim 1 or 6, characterised in that the moulding takes place by means of pressing, injection moulding or extrusion.

8. Method according to claim 2, characterised in that the organosol is moulded whilst expelling the solvent by spreading, pouring, doctoring or spraying.

9. Use of a material prepared by a method according to one of the claims 1 to 8, for packaging foodstuffs, cosmetics and cleaning agents.

## Revendications

1. Procédé de fabrication d'un moyen d'emballage biodégradable dans lequel on fait fondre au moins 30 pour-cent en poids d'une résine synthétique biodégradable à base de polysaccharide, d'un point de fusion pouvant aller jusqu'à 240°C et, on ajoute, simultanément ou par la suite, 20 à 70 pour-cent en poids d'amidon natif ou de cellulose non modifiée, la teneur en eau de l'amidon ne dépassant par 20 %, on granule le mélange et on met ensuite le granulé en forme de la façon habituelle, en adoptant des conditions telles que la structure granulaire de l'amidon ne soit sensiblement pas modifiée, le mélange pouvant éventuellement contenir des adjuvants habituels.

2. Procédé dans lequel on dissout au moins 30 % en poids d'une résine synthétique biodégradable à base de polysaccharide dans un solvant qui ne peut pas dissoudre l'amidon ou la cellulose non modifiée, on ajoute à la solution 20 à 70 % en poids d'amidon natif ou de cellulose non modifiée et on met en forme l'organosol ainsi obtenu d'une façon connue en soi, le mélange pouvant éventuellement contenir des adjuvants habituels.

3. Procédé selon la revendication 1 ou 2, caractérisé en ce qu'on utilise comme résine synthétique biodégradable un dérivé thermoplastique de la cellulose.

4. Procédé selon une des revendications précédentes, caractérisé en ce qu'on utilise comme résine synthétique biodégradable, de l'acétate de cellulose, du propionate de cellulose, du butyrate de cellulose, de l'acétobutyrate de cellulose ou de l'éthylcellulose.

5. Procédé selon une des revendications précédentes, caractérisé en ce qu'on utilise comme amidon natif de l'amidon de pomme de terre.

6. Procédé selon une des revendications 1, 3, 4 ou 5, caractérisé en ce qu'on mélange la résine synthétique à l'amidon ou à la cellulose non modifiée et on fait fondre la résine synthétique en présence de l'amidon ou de la cellulose non modifiée.

7. Procédé selon la revendication 1 ou 6, caractérisé en ce que la mise en forme s'effectue par compression, moulage par injection ou extrusion.

8. Procédé selon la revendication 2, caractérisé en ce qu'on met l'organosol en forme par enduction, coulée, raclage ou pulvérisation, avec expulsion du solvant.

9. Utilisation d'une matière fabriquée par un procédé selon une des revendications 1 à 8 pour l'emballage de denrées alimentaires, de cosmétiques et de produits de nettoyage.
